(19) Europäisches Patentamt
European Patent Office
Office européen des brevets

(11) EP 2 196 817 B1

(12) **EUROPEAN PATENT SPECIFICATION**

(45) Date of publication and mention of the grant of the patent:
**27.04.2016 Bulletin 2016/17**

(51) Int Cl.:
***G01S 19/53*** *(2010.01)*

(21) Application number: **08291162.9**

(22) Date of filing: **10.12.2008**

(54) **An antenna measurement system and method thereof**

Antennenmesssystem und zugehöriges Verfahren

Système de mesure d'antenne et procédé correspondant

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**16.06.2010 Bulletin 2010/24**

(73) Proprietor: **ALCATEL LUCENT**
**92100 Boulogne-Billancourt (FR)**

(72) Inventor: **Glinka, Michael Frank**
**90571 Schwaig bei Nürnberg (DE)**

(74) Representative: **Wetzel, Emmanuelle et al**
**Alcatel Lucent**
**Intellectual Property & Standards**
**70430 Stuttgart (DE)**

(56) References cited:
**WO-A-00/74272**
**US-A- 4 963 889**
**US-A- 5 347 286**
**US-A1- 2001 024 172**
**US-A1- 2003 201 947**

- **NORREMARK ET AL: "Instrumentation and method for high accuracy geo-referencing of sugar beet plants" COMPUTERS AND ELECTRONICS IN AGRICULTURE, ELSEVIER, vol. 56, no. 2, 23 March 2007 (2007-03-23), pages 130-146, XP005933933 ISSN: 0168-1699**
- **J-A TING ET AL: "A Kalman filter for robust outlier detection" INTELLIGENT ROBOTS AND SYSTEMS, 2007. IROS 2007. IEEE/RSJ INTERNATIONAL CONFERENCE ON, IEEE, PISCATAWAY, NJ, USA, 29 October 2007 (2007-10-29), pages 1514-1519, XP031222157 ISBN: 978-1-4244-0911-2**

EP 2 196 817 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

Field of the invention

The invention relates to a measurement system for a telecommunication system for measuring antenna state variables, and to a method for measuring antenna state variables.

Background and related art

An antenna is a transducer designed to transmit and receive electromagnetic waves. It converts electromagnetic waves into electrical currents and vice versa. An antenna is an arrangement of conductors that generate radiating electromagnetic field in response to an applied alternating voltage and the associated alternating electric current, or it can be placed in an electromagnetic field so that the field will induce an alternating current in the antenna and a voltage between its terminals.

That radiation pattern of an antenna is the geometric pattern of the relative field strength of the field emitted by the antenna. The radiation pattern of an antenna is typically represented by a three-dimensional graph, or polar plots of the horizontal and vertical cross sections. The antenna's position, including the altitude, the latitude, the azimuth and the tilt angles indicate exactly in what direction the radiation pattern of the antenna is located.

An inclinometer or clinometer matter is an instrument for measuring angles of slope or tilt, elevation or inclination of an object, as an antenna with respect to gravity. However, the use of the inclinometers for measuring the angles of the antenna may present several accuracy problems.

Another Instrument for measurement is the magnetic compass for measuring the azimuth. The magnetics compasses are very sensitive to magnetic interference from currents of the communication systems. The height of an antenna is often measured by estimating the height of the building or structure where the antenna is positioned, and therefore is susceptible to position inaccuracies.

US 2003/0201947 A1 discloses a method of aligning an antenna within a predetermined azimuth direction, in which the antenna is hingeably connected to a support.

In response to processed positioning data received by a first global positioning system receiver dish from a global positioning satellite system, the first receiver dish being connected to the antenna and locatable at predetermined first and second positions away from the antenna, the first receiver dish determines an antenna azimuth direction and is moved from the antenna azimuth direction towards the predetermined azimuth direction so as to align the antenna.

US 5 347 286 discloses a system for automatically pointing a directional antenna.

The system comprises two GPS antennas mounted at horizontally opposed extremities of the directional antenna.

Summary

The Invention relates to an antenna measurement system for a telecommunications system for measuring antenna state variables according to claim 1.

One of the advantages of the invention is that an accurate measurement of the state variables of an antenna is made feasible, including the azimuth angle and the tilt angle of the antenna. The measurements take advantage of the separation of the positions where at least two satellite navigation receivers are located, and the geometrical calculations of the measurements between the receivers. Further, an embodiment obtains average and variance calculations to further increase the accuracy of the state variable results, and to possibly exclude certain error data outside certain sage margins. The receiver can be for example a Global Positioning System (GPS) receiver.

The processor may be located in a network element of the telecommunications system.

The processor may be coupled to the first and the second satellite navigation receiver and the transmitter may be the antenna.

The transmitter may be a mobile communications transmitter.

The first extension may be a supporting pull-out mechanism.

The processor may be adapted for storing a series of antenna coordinates and for obtaining an average value and a variance value of the antenna coordinates.

The antenna measurement system may further comprise: a third extension coupled to a center-left position of said antenna and to a third satellite navigation receiver; a forth extension coupled to a center-right position of said antenna and to a forth satellite navigation receiver.

In another aspect, the invention relates to a method for measuring antenna state variables on a telecommunications system.

The method for measuring antenna state variables may further comprise: storing a series of antenna coordinates and obtaining an average and a variance of the antenna coordinates.

Brief description of the drawings

The accompanying drawings illustrate preferred embodiments of the invention and examples not covered by the invention and serve to explain advantages and principles of the invention. In the drawings:

Figure 1 shows a schematic diagram of an exemplary antenna measurement system,

Figures 2 and 2a show schematic diagrams of exemplary embodiments of an antenna measurement system,

Figure 3 shows a schematic diagram of a graphical representation for calculating antenna state variables,

Figure 4 shows a set of antenna measurement system on a three sector site,

Figure 5 shows a graphics representing a correlation of the measured data of the antenna state variables,

Figure 6 shows a flowchart of an exemplary method for measuring antenna state variables.

Detailed description

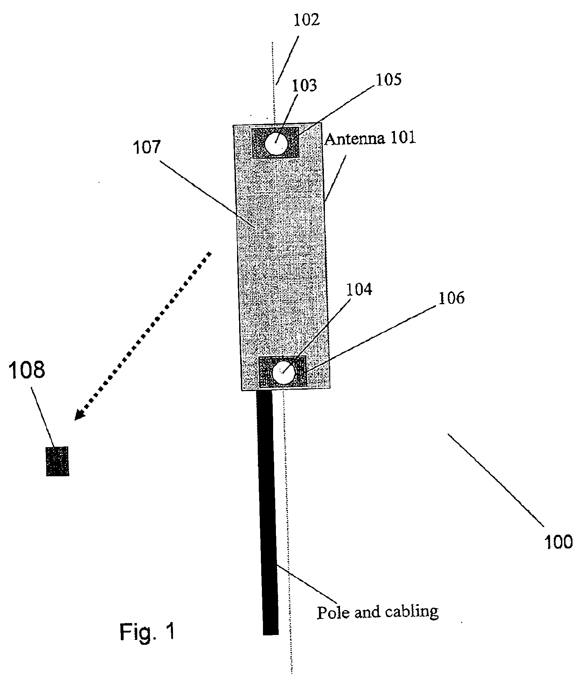

Fig. 1 shows an antenna measurement system 100 for a telecommunications system for measuring antenna state variables. The antenna measurement system 100 comprises an antenna 101 at a first location 102, the antenna 101 comprising a first position 103 and a second position 104. The antenna measurement system 100 further comprises a first satellite navigation receiver 105 at the first position 103 and a second satellite navigation receiver 106 at the second position 104. Further, the antenna measurement system 100 comprises a transmitter 107 and a processor 108.

The antenna measurement system 100 is adapted for measuring antenna state variables such as but not limited to the azimuth angle and the tilt angle of the antenna 101. The first satellite navigation receiver 105 is adapted for continuously measuring first antenna coordinates and the second satellite navigation receiver 106 is adapted for continuously measuring second antenna coordinates. The transmitter is adapted for transmitting the information related to the first and the second antenna coordinates measured by the first and second satellite based navigation receivers.

The transmitter 107 may be a separated mobile communications transmitter, or it may be the antenna 101 itself. The processor 108 is adapted for calculating at least one of the azimuth angles and the tilt angles of the antenna 101, using at least the first and the second antenna coordinates as the input variables. The processor 108 may be directly coupled with the antenna 101 and/or the satellite navigation receivers 105, 106. Alternatively, the processor 108 may be located at a network element of the telecommunication system.

The first position where the first satellite navigation receiver is located, is typically on an opposite position of the second position 104. The positions where the satellite navigation receivers are located are adapted according to the geometry of the antenna 101. Both satellite navigation receivers are located in a way so that it allows a maximum separation between them. The first and the second position of the antenna 101 serve as reference position for the location of the satellite navigation receivers within the antenna, but does not necessarily indicate that the satellite navigation receiver are located directly an the positions. Further, the processor calculates the antenna state variables based on the two coordinates received and measured by the satellite navigation receivers.

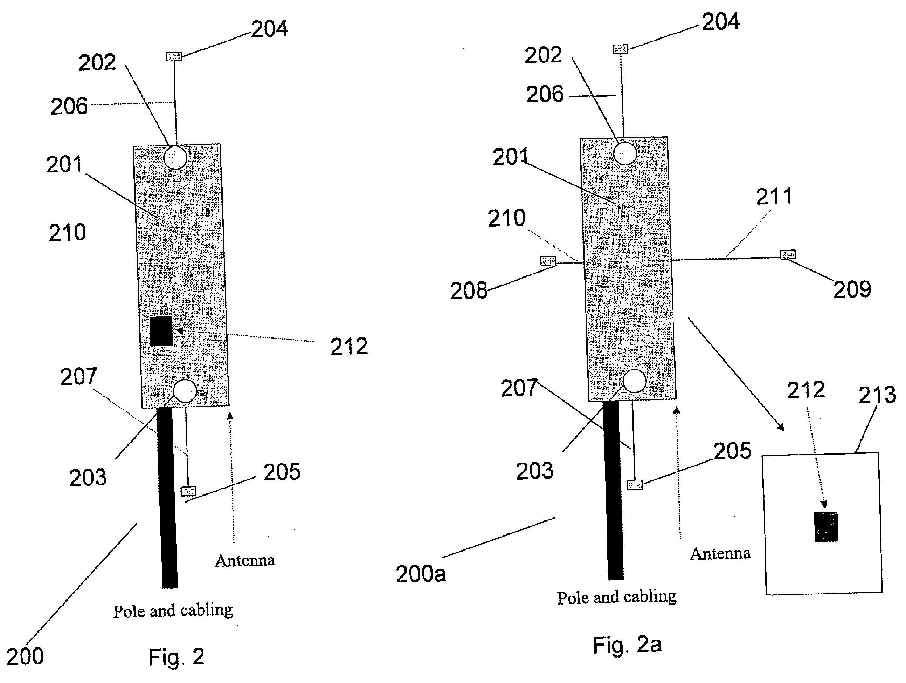

Fig. 2 shows an embodiment of an antenna measurement system 200 comprising an antenna 201 with a first position 202 and a second position 203, a first 204 and a second satellite navigation receiver 205. The antenna measurement system 200 further comprises a first extension 206 between the first position 202 and the first satellite navigation receiver 204.

The first extension 206 allows a further separation of the satellite navigation receivers. Between the second position 203 and the second satellite navigation receiver 204, a second extension 207 may also be available in order to further increase the separation between the satellite navigation receivers 204, 205. One or more extension can be implemented as a supporting pull-out mechanism for modifying said first position of said second satellite navigation receiver, and therefore the separation distance between the satellite navigation receivers. The processor in the embodiment is directly coupled to both satellite navigation receivers 204, 205 and is adapted for receiving the antenna state coordinates. After the processor 212 completes the calculation of the antenna state variables, as for example the azimuth and the tilt angle, the result of the calculation is transmitted by a transmitter for further processing by an external network element. The transmitter can be a mobile communications transmitter or the antenna 201. In the case that the antenna 201 functions as the transmitter of the antenna coordinates, the reception of the antenna coordinates by the network element serves as a verification of the correct Operation of the antenna 201.

Further, the reception of the correct coordinates for each sector indicates the correct connection of each antenna. As a result of the indication, missing connections or sector swaps due to wrong cabling are easily recognized within the network element of the telecommunications system. Therefore the embodiments reduces the requirements of expensive drive testing, or so called sector drives.

Fig 2a shows a further alternative embodiment of an antenna measurement system 200a further comprising a third satellite navigation receiver 208 and a fourth satellite navigation receiver 209 having a third and a fourth extension 210 and 211 respectively. The third extension 210 is coupled to a center left position of the antenna 201, the fourth extension 211 is coupled to a center right position. The center left position and the center right position are typically located at a half distance between the first and the second satellite navigation receivers. In general, the third satellite navigation receiver 210 is at an opposite direction of the fourth satellite navigation receiver 211. In an embodiment, the processor 212 is located at a network element 213 of the telecommunications system. In that case, the transmitter transmits the antenna coordinates measured by the satellite navigation receivers 204, 205, 208 and 209 for reception by the processor. The two or more antenna coordinates are used by the processor 212 as input variable for the calculation of the azimuth and tilt angles and the calculation of the measurement error of the satellite navigation receivers. The transmitter may be either a mobile communications transmitter or the antenna 201. Any combination between the number of satellite navigation receivers and the location of the processor are envisioned by further embodiments.

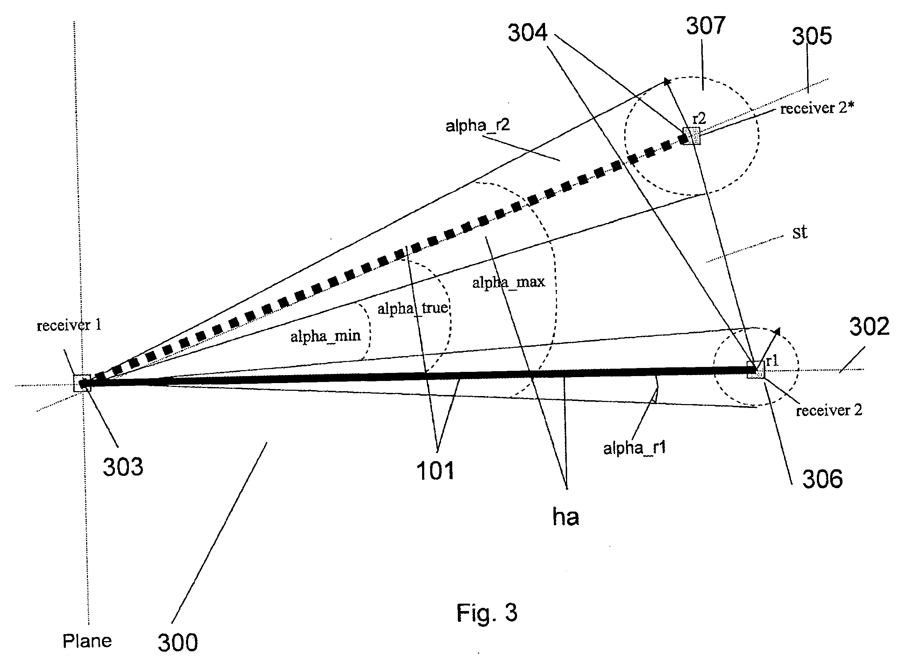

Fig. 3 shows a graphic representation 300 of trigonometrical calculations completed by the processor, or computer program product, for obtaining the antenna state variables, being at least one of the azimuth or tilt angles of the antenna, the latitude and the longitude of the antenna. The graphic representation 300 comprises an antenna measurement system comprising antenna 101 located at a first location 302 and at a second position 305. The antenna measurement system further comprises a first receiver 303 and a second receiver 304. The antenna coordinates measured by the second receiver may include an error as a result from the uncertainties of the second receiver, and the margin of error is represented by a first area of movement 306 for the first position and a second area of movement 307 for the second position of the antenna.

As the antenna 101 is adapted for movement to a second location 305, the second receiver 304 consequently changes its position from the first area of movement 306 to the second area of movement 307. The first 306 and the second area of movement 307 is a circumference with all possible measured positions of the second satellite navigation receiver. The first area of movement 306 comprises a first radius r1 and the second area of movement 307 comprises a second radius r2.

The processor of the antenna measurement system is adapted for receiving the antenna coordinates of the first and the second satellite navigation receivers 303, 304, when the antenna is located at the first location 302. If the second satellite navigation receiver 304 is moving within the area of movement 306, the processor continues collecting the data sent by the transmitter. In the case that the second satellite navigation receiver is moving as a result of a controlled movement of the antenna to a second position 305, the processor may not take into account the measurements for the calculation of the error and will wait until the antenna 101 reaches the new position 305. The processor is able to calculate if the movement is caused by an external and unwanted source, as for example the wind, and therefore it is represented in the area of movement 306; or if the movement is manually controlled and/or remotely started, in which case the processor waits until the antenna 101 is fixed again into the second position 305.

The first area of movement 306 comprises the first radius r1, and is the result of the measurement errors of the first satellite navigation receiver, and/or a result of the unwanted movement of the antenna caused by external surfaces, as for example the wind. The second area of movement 307 may comprise a second radius r2, describing the possible differences in the movement of the antenna 101 and the second receiver 305 in this second position 307. The angular difference between the first and the second location 302 and 305, having the movement axis approximately around the first satellite navigation receiver 303, is described by the alpha angle. The alpha angle is calculated in three different values: the alpha max being the maximum possible angle between the first and the second location, the alpha min being the minimum angle between the locations, and the alpha true being the average between both alpha max and alpha min values. The calculations of the three alpha angles are the result of the inherent inaccuracies presented in any measurement system. The differences between the maximum and the minimum angle depend an the accuracy of the measurement system.

The three values of the alpha angle are calculated using trigonometrical formulas that include as input variables: the first r1 and the second radius r2, the antenna deflection st and the distance ha between the first 303 and the second satellite navigation receiver 307. The model represented in the fig. 3 may describe either the horizontal plane or the vertical plane, and therefore can be used for calculating the azimuth angle and the tilt angle. The calculations of the alpha angles is used for estimating the limits of the expectable measurement errors which are caused by the uncertainties of the limited resolution of the satellite receivers and the antenna dimensions and geometry. Therefore, the calculations may be used for an estimation of measurement errors resulting from the uncertainties of the satellite receivers and antenna dimensions.

Some possible but not limiting formulas for calculating the three alpha angles between the first and the second positions may include:

$$alpha_true\ [°] = (180/pi) * acos[1-(1/2)*(st/ha)^2]$$

$$alpha_min\ [°] = (180/pi)* (acos[1-(1/2)*(st/ha)^2]-atan[r1/ha]-atan[r2/ha])$$

$$alpha_max\ [°] = (180/pi)* (acos[1-(1/2)*(st/ha)^2]+atan[r1/ha]+atan[r2/ha])$$

Some possible but not limiting formulas for calculating the uncertainties may be:

$$alpha_r1 = atan[r1/ha]$$

$$alpha_r2 = atan[r2/ha]$$

$$\text{Absolute uncertainty } Uabs = 2(alpha_r1 + alpha_r2)$$

$$\text{Relative uncertainty } Urel = 2(alpha_r1 + alpha_r2)/alpha_true$$

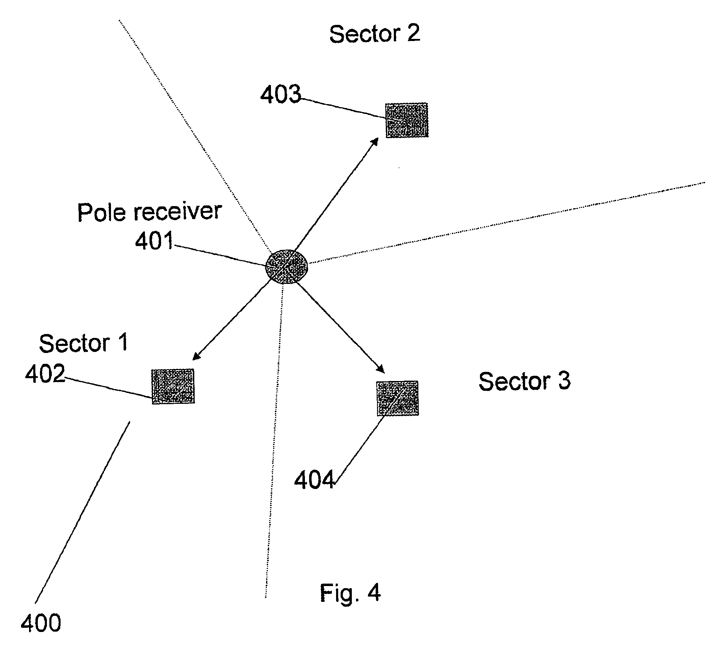

Fig. 4 shows a set of antenna measurement systems in a three antenna sectors 400 comprising a pole satellite navigation receiver 401 used as a reference signal, a first antenna measurement system 402 at the sector 1, a second antenna measurement system 403 at the sector 2 and a third antenna measurement system 404 at the sector 3. Each one of first 402, second 403 and third antenna measurement system 404 comprises two satellite navigation receivers at opposite positions of the antenna system. On an alternative implementation, the pole receiver is used as one of the antenna coordinates for the three sectors and therefore each sector requires only a further satellite navigation receiver.

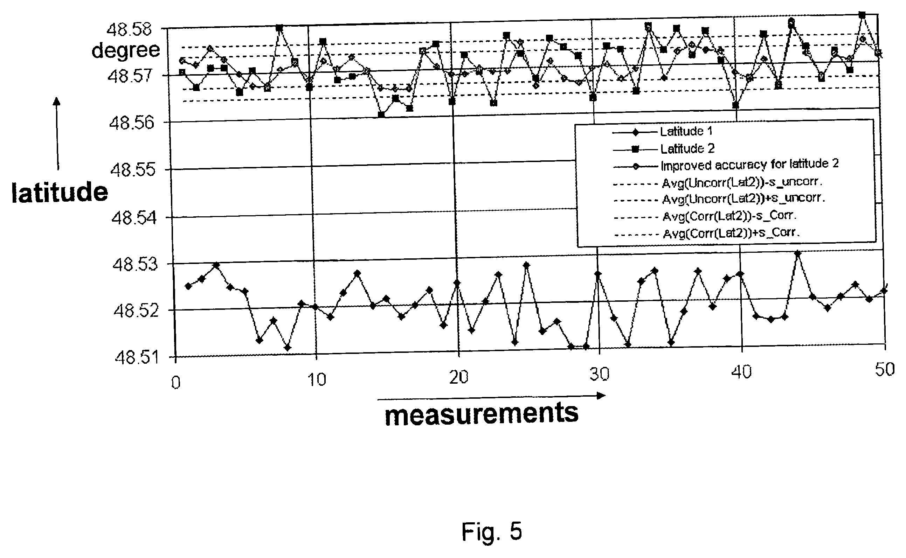

Fig. 5 shows a graphics representing a correlation of the measured data of the antenna state variables of a simulated measurement data from two satellite receivers located within a widely dispersed network. As measured coordinates will fluctuate within uncertainties ri of each satellite receiver, the correlation of the measurement results obtains from different satellite receivers located within the network reduce final uncertainties. Above is shown for latitude of receiver 2 (Latitude 2) the correlated signal (Improved accuracy for latitude 2) with its reduced standard deviations.

The variation of antenna length shows that the more distant the two satellite receivers are located, the smaller the resulting angle measurement error. For example, for a separation distance of the receivers of 1m and given r1 and r2, both the absolute and relative error are below 5%. The signals are combined to achieve less noise in the combined measurement signal.

In the correlated data of fig. 5, two signals are simulated and the combined signal is calculated. The combined signal is calculated with the average and the standard deviation of the two signals. As a result, the standard deviation of the combined signal is smaller than the respective standard deviations of each signal.

The figure describes how the combined signal (Improved accuracy for latitude 2) is smoother than each of its 'parent'-signals u0 (Latitude 1) and u1 (Latitude 2).

The correlation of the measurement data by the processor (near the antenna) or within the telecommunication system, for example, within the Operations and Maintenance Center (OMC), can improve the accuracy, and therefore reaching smaller uncertainties r1 and r2 by the extractable rods and the correlations of the measured signals. The higher the accuracy, the smaller the required distance ha between the receivers.

Although the examples only show the signals of two receivers correlated, the embodiments envision the possibility of correlating two, three or four receivers at an antenna and can also correlate at the OMC the reported signals of many receivers that are within a cluster of antennas, that may reach up to hundred antennas.

In order to improve the accuracy, as many signals as possible may be added to the measurement signals from the telecommunications network. The more signals are available, the less noise is measured. The diagram would tend to be a straight green line if several signals are correlated, wherein the number of correlated signals has no theoretical limit. It is therefore possible to correlate over a whole network by using the signals of various geographically dispersed receivers, obtaining a higher accuracy. By canceling opposite phases over time, it allows only the constant components of random noise inputs to pass in the lower spectral range.

Inputs are randomly distributed noisy data over time which represents new unexpected information (for example for measured coordinates within r1, r2, r3). The resulting standard deviation of the combined signal (made of many informations) is always lower than each of its components.

The examples also envision excluding measurement data from higher noisy locations, wherein if a receiver has a radius r that is too high to be included in the correlation of better signals. In that situation it is probable that a local interference is disturbing the signal, for example from a local TV station, or a high-voltage supply. At the processor, for example in the OMC, it is possible to pick the best signals that reach the processor and therefore obtain a better correlation.

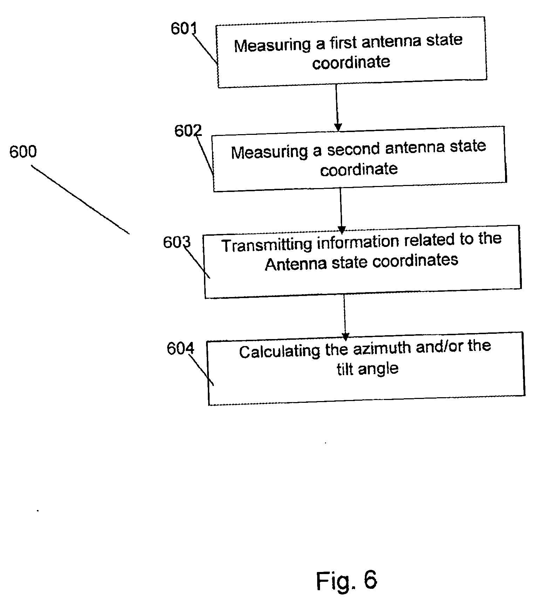

Fig. 6 shows a method 600 for measuring antenna state variables on a telecommunications system comprising an antenna at a first location, the antenna comprising a first and a second position. The method comprises: In a first step 601, measuring a first antenna coordinate at the first position of the antenna with a first satellite navigation receiver. In a second step 602, measuring a second antenna coordinate at the second position of the antenna with a second satellite navigation receiver. In a third step 603, transmitting information related to the first and second antenna coordinates from the first and the second satellite navigation receiver. In a forth step 504, calculating at least one of an azimuth angle and a tilt angle of said antenna using said first and said second antenna coordinate, wherein said first position is located on an opposite position of said second position.

The first and the second step do not need to be executed in a sequential manner, but can also be executed in parallel, for example in order to correlate the signals of two receivers. Further, it is possible to auto-correlate each receiver's signal with its own measurements over time, and therefore decrease standard deviations reported from each receiver.

List of reference numerals

Antenna measurement system 100
Antenna 101
First location 102
First position 103
Second position 104
First satellite navigation receiver 105
Second satellite navigation receiver 106
Transmitter 107
Processor 108
Antenna measurement system 200
Antenna 201
First position 202
Second position 203
First satellite navigation receiver 204
Second satellite navigation receiver 205
First extension 206
Second extension 207
Third satellite navigation receiver208
Fourth satellite navigation receiver 209
Third extension 210
Fourth extension 211
Processor 212
Network element of the telecommunication system 213
Graphic representation 300
First location 302
First receiver 303
Second receiver 304
Second location 305
First area of movement 306
Second area of movement 307
Three antenna sectors 400
Pole satellite navigation receiver 401
First antenna measurement system 402

Second antenna measurement system 403
Third antenna measurement system 404
Graphics representing the correlation of the measured data 500
Method 600
First step 601
Second step 602
Third step 603
Fourth step 604

## Claims

1. Antenna measurement system (200, 200a) for a telecommunications system for measuring antenna state variables of an antenna (201) at a first location (102) comprising:

    - said antenna (201);
    - a first satellite navigation receiver (204) adapted for measuring first antenna coordinates;
    - a second satellite navigation receiver (205) adapted for measuring second antenna coordinates;
    - a transmitter (107) adapted for transmitting information related to said first and second antenna coordinates from said first (204) and second satellite navigation receiver (205); and

        - a processor (108) adapted for calculating at least one of an azimuth angle and a tilt angle of said antenna (201) using at least said first and said second antenna coordinates,
        - **characterized in that** in order to increase the separation of the satellite navigation receivers (204, 205), said antenna measurement system further comprises
        - a first extension (206) between a first position (202) of said antenna (201) and the first satellite navigation receiver (204), and a second extension (207) between a second position (203) of said antenna and the second satellite navigation receiver (205), wherein said first position is located opposite said second position.

2. Antenna measurement system of claim 1, wherein said processor (108) is located in a network element of said telecommunications system.

3. Antenna measurement system of claim 1, wherein said processor (108) is coupled to said first (204) and said second satellite navigation receiver (205).

4. Antenna measurement system of claim 1, wherein said transmitter (107) is a mobile communications transmitter.

5. Antenna measurement system of claim 1, wherein said transmitter (107) is said antenna (201).

6. Antenna measurement system of claim 1 further comprising:

    - a third extension (210) coupling a third satellite navigation receiver (208) to said antenna (201) at a center-left position of said antenna and a fourth extension (211) coupling a fourth satellite navigation receiver (209) to said antenna (201) at a center-right position of said antenna.

7. Antenna measurement system of any of the preceding claims, wherein said first extension (206) is a supporting pull-out mechanism.

8. Antenna measurement system of any of the preceding claims, wherein said processor (108) is adapted for storing a series of antenna coordinates and for obtaining an average value and a variance value of said antenna coordinates.

9. Method for measuring antenna state variables on a telecommunications system comprising an antenna at a first location, said method comprising:

    - measuring (601) first antenna coordinates with a first satellite navigation receiver;
    - measuring (602) second antenna coordinates with a second satellite navigation receiver;
    - transmitting (603) information related to said first and second antenna coordinates from said first and second satellite navigation receiver; and

- calculating (604) at least one of an azimuth angle and a tilt angle of said antenna using said first and said second antenna coordinates;
- **characterized by**
- increasing the separation of the satellite navigation receivers (204, 205) by a first extension (206) between a first position (202) of said antenna (201) and the first satellite navigation receiver (204), and by a second extension (207) between a second position (203) of said antenna and the second satellite navigation receiver (205), wherein said first position is located opposite said second position.

**10.** Method for measuring antenna state variables of claim 9 further comprising:

storing a series of antenna coordinates and obtaining an average and a variance of said antenna coordinates.

**Patentansprüche**

**1.** Antennenmesssystem (200, 200a) für ein Telekommunikationssystem zur Messung von Antennenzustandsvariablen einer Antenne (201) in einer ersten Position (102), umfassend:

- Besagte Antenne (201);
- einen ersten Satellitennavigationsempfänger (204), ausgelegt für das Messen erster Antennenkoordinaten;
- einen zweiten Satellitennavigationsempfänger (205), ausgelegt für das Messen zweiter Antennenkoordinaten;
- einen Sender (107), ausgelegt für das Senden von Informationen in Verbindung mit besagten ersten und zweiten Antennenkoordinaten von besagtem erstem (204) und besagtem zweitem Satellitennavigationsempfänger (205);

und

- einen Prozessor (108), ausgelegt für das Berechnen von mindestens entweder einem Azimutalwinkel oder einem Tiltwinkel besagter Antenne (201) unter Verwendung von mindestens besagten ersten und besagten zweiten Antennenkoordinaten,
- **dadurch gekennzeichnet, dass** besagtes Antennenmesssystem zum Zweck der Erhöhung der Trennung der Satellitennavigationsempfänger (204, 205) weiterhin umfasst:
- eine erste Erweiterung (206) zwischen einer ersten Position (202) besagter Antenne (201) und dem ersten Satellitennavigationsempfänger (204) sowie eine zweite Erweiterung (207) zwischen einer zweiten Position (203) besagter Antenne und dem zweiten Satellitennavigationsempfänger (205), wobei besagte erste Position der besagten zweiten Position gegenüberliegt.

**2.** Das Antennenmesssystem nach Anspruch 1, wobei besagter Prozessor (108) in einem Netzwerkelement besagten Telekommunikationssystems liegt.

**3.** Das Antennenmesssystem nach Anspruch 1, wobei besagter Prozessor (108) an besagten ersten (204) und besagten zweiten Satellitennavigationsempfänger (205) gekoppelt ist.

**4.** Das Antennenmesssystem nach Anspruch 1, wobei besagter Sender (107) ein mobiler Kommunikationssender ist.

**5.** Das Antennenmesssystem nach Anspruch 1, wobei besagter Sender (107) besagte Antenne (201) ist.

**6.** Das Antennenmesssystem nach Anspruch 1, weiterhin umfassend:

- eine dritte Erweiterung (201) die einen dritten Satellitennavigationsempfänger (208) an einer mittig-linken Position besagter Antenne an besagte Antenne (201) koppelt, und eine vierte Erweiterung (211), die einen vierten Satellitennavigationsempfänger (209) an einer mittig-rechten Position besagter Antenne an besagte Antenne (201) koppelt.

**7.** Das Antennenmesssystem nach jeglichem der vorgenannten Ansprüche, wobei besagte erste Erweiterung (206) ein unterstützender ausfahrbarer Mechanismus ist.

**8.** Das Antennenmesssystem nach jeglichem der vorgenannten Ansprüche, wobei besagter Prozessor (108) ausgelegt ist für das Speichern einer Serie von Antennenkoordinaten und für das Ermitteln eines Mittelwerts und eines Varianzwerts aus besagten Antennenkoordinaten.

**9.** Verfahren für das Messen von Antennenzustandsvariablen zu einem Telekommunikationssystem, welches eine erste Antenne in einer ersten Position umfasst, wobei besagtes Verfahren umfasst:

- das Messen (601) erster Antennenkoordinaten mit einem ersten Satellitennavigationsempfänger;
- das Messen (602) zweiter Antennenkoordinaten mit einem zweiten Satellitennavigationsempfänger;
- das Senden (603) von Informationen in Verbindung mit besagten ersten und zweiten Antennenkoordinaten von besagtem erstem und besagtem zweitem Satellitennavigationsempfänger;

und

- das Berechnen (604) von mindestens entweder einem Azimutalwinkel oder einem Tiltwinkel besagter Antenne unter Verwendung von besagten ersten und besagten zweiten Antennenkoordinaten,
- **gekennzeichnet durch**
- das Erhöhen der Trennung der Satellitennavigationsempfänger (204, 205) **durch** eine erste Erweiterung (206) zwischen einer ersten Position (202) besagter Antenne (201) und dem ersten Satellitennavigationsempfänger (204) sowie **durch** eine zweite Erweiterung (207) zwischen einer zweiten Position (203) besagter Antenne und dem zweiten Satellitennavigationsempfänger (205), wobei besagte erste Position der besagten zweiten Position gegenüberliegt.

**10.** Das Verfahren für das Messen von Antennenzustandsvariablen nach Anspruch 9, weiterhin umfassend:

Das Speichern einer Serie von Antennenkoordinaten und das Ermitteln eines Durchschnitts und einer Varianz besagter Antennenkoordinaten.

## Revendications

**1.** Système de mesure d’antenne (200, 200a) pour un système de télécommunications destiné à mesurer des variables d’état d’antenne d’une antenne (201) à un premier emplacement (102) comprenant :

- ladite antenne (201) ;
- un premier récepteur de navigation par satellite (204) adapté pour mesurer des premières coordonnées d’antenne ;
- un deuxième récepteur de navigation par satellite (205) adapté pour mesurer des deuxièmes coordonnées d’antenne ;
- un émetteur (107) adapté pour émettre des informations liées auxdites premières et deuxièmes coordonnées d’antenne depuis ledit premier (204) et ledit deuxième récepteur de navigation par satellite (205) ;

et

- un processeur (108) adapté pour calculer au moins l’un d’un angle d’azimut et d’un angle d’inclinaison de ladite antenne (201) en utilisant au moins lesdites premières et deuxièmes coordonnées d’antenne,
- **caractérisé en ce que**, afin d’augmenter la séparation des récepteurs de navigation par satellite (204, 205), ledit système de mesure d’antenne comprend en outre
- une première extension (206) entre une première position (202) de ladite antenne (201) et le premier récepteur de navigation par satellite (204), et une deuxième extension (207) entre une deuxième position (203) de ladite antenne et le deuxième récepteur de navigation par satellite (205), ladite première position étant située opposée à ladite deuxième position.

**2.** Système de mesure d’antenne selon la revendication 1, dans lequel ledit processeur (108) est situé dans un élément de réseau dudit système de télécommunications.

**3.** Système de mesure d’antenne selon la revendication 1, dans lequel ledit processeur (108) est couplé audit premier (204) et audit deuxième récepteur de navigation par satellite (205).

4. Système de mesure d'antenne selon la revendication 1, dans lequel ledit émetteur (107) est un émetteur de communications mobile.

5. Système de mesure d'antenne selon la revendication 1, dans lequel ledit émetteur (107) est ladite antenne (201).

6. Système de mesure d'antenne selon la revendication 1, comprenant en outre :

- une troisième extension (210) couplant un troisième récepteur de navigation par satellite (208) à ladite antenne (201) au niveau d'une position centrale gauche de ladite antenne et une quatrième extension (211) couplant un quatrième récepteur de navigation par satellite (209) à ladite antenne (201) au niveau d'une position centrale droite de ladite antenne.

7. Système de mesure d'antenne selon l'une quelconque des revendications précédentes, dans lequel ladite première extension (206) est un mécanisme extractible de support.

8. Système de mesure d'antenne selon l'une quelconque des revendications précédentes, dans lequel ledit processeur (108) est adapté pour stocker une série de coordonnées d'antenne et pour obtenir une valeur de moyenne et une valeur de variance desdites coordonnées d'antenne.

9. Procédé pour mesurer des variables d'état d'antenne sur un système de télécommunications comprenant une antenne à un premier emplacement, ledit procédé comprenant les étapes suivantes :

- mesurer (601) des premières coordonnées d'antenne avec un premier récepteur de navigation par satellite ;
- mesurer (602) des deuxièmes coordonnées d'antenne avec un deuxième récepteur de navigation par satellite ;
- émettre (603) des informations liées auxdites premières et deuxièmes coordonnées d'antenne depuis ledit premier et ledit deuxième récepteur de navigation par satellite ;

et

- calculer (604) au moins l'un d'un angle d'azimut et d'un angle d'inclinaison de ladite antenne en utilisant lesdites premières et deuxièmes coordonnées d'antenne,
- **caractérisé par** l'étape suivante :
- augmenter la séparation des récepteurs de navigation par satellite (204, 205) par une première extension (206) entre une première position (202) de ladite antenne (201) et le premier récepteur de navigation par satellite (204), et par une deuxième extension (207) entre une deuxième position (203) de ladite antenne et le deuxième récepteur de navigation par satellite (205), ladite première position étant située opposée à ladite deuxième position.

10. Procédé pour mesurer des variables d'état d'antenne selon la revendication 9, comprenant en outre les étapes suivantes :

- stocker une série de coordonnées d'antenne et obtenir une moyenne et une variance desdites coordonnées d'antenne.

100
106
105
Antenna 101
104
102
103
Pole and cabling
107
108

Fig. 1

204
202
206
201
210
212
207
203
205
Antenna
Pole and cabling
200
204
202
206
201
211
210
208
209
207
212
213
203
205
Antenna
200a
Pole and cabling

Fig. 2

Fig. 2a

304
307
305
receiver 2*
r2
alpha_r2
st
alpha_max
alpha_true
receiver 1
alpha_min
302
r1
receiver 2
303
101
alpha_r1
306
ha
Plane
300

Fig. 3

Sector 2
403
Sector 3
404
Pole receiver
401
Sector 1
402
400

Fig. 4

latitude
degree
48.58
48.57
48.56
48.55
48.54
48.53
48.52
48.51
0
10
20
30
40
50
measurements
Latitude 1
Latitude 2
Improved accuracy for latitude 2
Avg(Uncorr(Lat2))-s_uncorr.
Avg(Uncorr(Lat2))+s_uncorr.
Avg(Corr(Lat2))-s_Corr.
Avg(Corr(Lat2))+s_Corr.

Fig. 5

Measuring a first antenna state coordinate
Measuring a second antenna state coordinate
Transmitting information related to the Antenna state coordinates
Calculating the azimuth and/or the tilt angle
601
602
603
604
600

Fig. 6

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 20030201947 A1
- US 5347286 A